# EUROPEAN PATENT APPLICATION

(11) **EP 4 421 733 A1**
(43) Date of publication of application: **28.08.2024**
(21) Application number: 24159883.8
(22) Date of filing: 27.02.2024
(51) Int. Cl.: G06T 7/00

(54) **ADDITIVE MANUFACTURING LAYER DEFECT IDENTIFICATION AND ANALYSIS USING MASK TEMPLATE**

(30) Priority: 27.02.2023 US 202363448478 P
(71) Applicant: Howmedica Osteonics Corporation, Mahwah, New Jersey 07430 (US)
(72) Inventor: RUSSELL, Sean, Cahir, E21 E516 (IE); MAHER, Anthony, Limerick, V94 NT6E (IE); BRAZEL, Emma, Cork, T45 W314 (IE)
(74) Representative: Gill Jennings & Every LLP

(57) **Abstract**

A quality of a formed layer of a build structure being fabricated by an additive manufacturing machine is assessed. A digital image is obtained of a portion of the formed layer of the build structure within a build layer. First region image data including data corresponding to a first region of the formed layer is separated, via a computer processor, from second region image data including data corresponding to one of or both a second region of the formed layer or a first region of the build layer outside of the formed layer based on a layer image template. A subset of image intensity data corresponding to a subset of the first region image data is analyzed, via the computer processor, to determine a characteristic value based on the analysis. An alert is sent, via the computer processor, when the characteristic value deviates from a preset range.

## Description

### CROSS-REFERENCE TO RELATED APPLICATION

The present application claims the benefit of the filing date of U.S. Provisional Application No. 63/448,478 filed February 27, 2023, the entirety of the disclosure of which is hereby incorporated herein by reference.

### FIELD

The present invention generally relates to additive manufacturing, and in particular relates to a system for improving the efficiency of the assessment of the quality of components or other build structures fabricated by additive manufacturing (AM) and thereby the overall efficiency of the fabrication of such build structures.

### BACKGROUND

Additive manufacturing (AM) is increasingly used in the development of new products across many industrial sectors such as the medical and aerospace industries. In some forms of additive manufacturing, high energy beam processing (HEBP) techniques can be used to build three-dimensional (3D) parts as a series of two-dimensional (2D) layers via a layer-wise computer-controlled production process. HEBP machines used in AM, which may be termed high energy beam additive manufacturing (HEBAM) machines, harness the energy of a beam to perform selective sintering or full melting to consolidate material such as metallic powder. In order to be used in a HEBAM machine, a 3D design is modeled and programmatically divided into 2D cross-sectional layers. The design in the form of a set of 2D cross-sections is then imported to a HEBAM machine and successively processed to materialize the 3D design into a physical 3D object.

Among many possible HEBAM machine layouts, a Powder-Bed Fusion (PBF) setup includes a powder deposition system having a moving rake, a roller or other spreading device, and powder containers. In order to process a 2D cross-section, the powder deposition system is used to deposit a powder layer onto a substrate in a machine processing area. A high energy beam, such as an electron beam, i.e., e-beam, or a laser beam, is focused onto a build platform and then deflected using computer-controlled optical lenses for a laser beam setup or electromagnetic lenses for an e-beam setup to trace out the geometry of the 2D cross-section of the 3D design. The energy of the beam causes a specific area of the powder layer within the traced-out geometry to be sintered or fully melted. Upon solidification of the traced-out areas within the current powder layer, the build platform lowers, and a new powder layer is deposited on the machine processing area. Three-dimensional objects can be built layer upon layer through the repetition of powder layer deposition and selective sintering or melting.

In another AM process sometimes referred to as magnetohydrodynamic (MHD) drop-on-demand ejection and liquid droplet deposition, such as the MagnetoJet printing process commercialized by Xerox Corporation, metal wire feedstock is deposited in a molten state from a nozzle in a droplet state onto a heated and moving substrate. Ejected droplets coalesce and solidify upon reaching the substrate or formed layers to form a build structure layer by layer.

In each of these AM processes, the resultant build structures are formed by heated and stacked build layers. Today, in processing these build layers, images of some or all of the formed layers are taken, often using a thermographic camera and converted into back-and-white images, and then used to identify defects in either one of or both the build structures themselves and the processing of the build structures. Manual visual checks of these images are then conducted to identify issues. If any issues or potential issues are identified with a build structure, then a follow-up CT scan or x-ray analysis is often conducted to confirm the existence of these issues and to ascertain the scope of the issues. Of course, such review and analysis results in significant downtime and thus loss in production efficiency as well as undesired scrapping or reworking of materials.

Therefore, there is a need to further improve both part quality and production efficiency for objects fabricated by an AM process.

### BRIEF SUMMARY

In accordance with an aspect, a quality of a formed layer of a build structure being fabricated by an additive manufacturing machine may be assessed by a process. In this process, a digital image of at least a portion of the formed layer of the build structure within a first build layer may be obtained. First region image data including data corresponding to a first region of the formed layer may be separated, via one or more computer processors, from second region image data including data corresponding to either one of or both a second region of the formed layer or a first region of the build layer outside of the formed layer based on a layer image template. A first subset of first region image intensity data corresponding to a first subset of the first region image data may be analyzed, via the one or more computer processors, to determine a first region characteristic value based on the analysis. A prompt or other alert may be sent, via the one or more computer processors, when the first region characteristic value deviates from a preset range.

In some arrangements, the first subset of the first region image data may correspond to an entirety of the first region image data.

In some arrangements in accordance with any of the foregoing, the preset range may be a single value.

In some arrangements in accordance with any of the foregoing, the first region characteristic value may be compared, via the one or more computer processors, to the preset range prior to sending the prompt or other alert.

In some arrangements in accordance with any of the foregoing, the first region image intensity data may include matrix locations of a matrix.

In some arrangements in accordance with any of the foregoing, the layer image template may be a virtual model, and a virtual model of the formed layer also may be prepared as part of the process. In some such arrangements, the first region image intensity data may include a grey scale level of pixels of the virtual model of the formed layer.

In some arrangements, a preset portion of the layer image template may be corresponded with a portion of the virtual model of the formed layer such that the layer image template outlines at least a section of the virtual model of the formed layer. In some such arrangements, correspondence of the preset portion and the portion of the virtual model may include any one or any combination of rescaling, translating, and rotating either one of or both the layer image template and the virtual model of the formed layer to align at least one location of the layer image template with at least one respective location of the virtual model of the formed layer.

In some arrangements, the first region characteristic value may correspond to a quantity of virtual spots identified in a virtual first region of the virtual model of the formed layer corresponding to the first region of the formed layer. In some such arrangements, the preset range may be a scalar value.

In some arrangements, the first region characteristic value may correspond to a quantity of adjacent virtual spots identified in a virtual first region of the virtual model of the formed layer corresponding to the first region of the formed layer having an image intensity value greater than a preset image intensity value. In some such arrangements, the preset range may be a scalar value. In some arrangements, each individual virtual spot may be identified and thereby counted from a respective single pixel of the obtained digital image in which adjacent virtual spots correspond to pixels of the obtained digital image less than a preset distance from each other. In some other arrangements, each individual virtual spot may be identified and thereby counted from a respective single pixel of the obtained digital image in which adjacent virtual spots may correspond to abutting pixels of the obtained digital image.

In some arrangements, individual virtual spots may correspond to respective single pixels of the obtained digital image. In some such arrangements, each individual virtual spot may be identified and thereby counted as part of the process.

In some arrangements, the quantity of virtual spots may be less than the preset scalar range.

In some arrangements in accordance with any of the foregoing, during the analysis of the first subset of the first region image intensity data, the first region image intensity data is manipulated to determine the first region characteristic value.

In some arrangements in accordance with any of the foregoing, the first region characteristic value may be a measure of central tendency, a measure of variability, or a sum of the measure of central tendency and the measure of variability. In such arrangements, the measure of central tendency may be a mean, median, or mode of the first subset of the first region image intensity data, and the measure of variability may be a standard deviation, variance, or range of the first subset of the first region image intensity data.

In some arrangements in accordance with any of the foregoing, the layer image template may be displayed overlying the virtual model of the formed layer as part of the process.

In some arrangements in accordance with any of the foregoing, the layer image template may be a layer mask template.

In some arrangements in accordance with any of the foregoing, the layer image template may outline a virtual desired first region boundary corresponding to a desired first region boundary for the first region of the formed layer. In some such arrangements, the first region may be an entirety of the formed layer such that the virtual desired first region boundary corresponds to a perimeter for the entirety of the formed layer.

In some arrangements in accordance with any of the foregoing, the first and the second regions may form an entirety of the formed first layer.

In some arrangements in accordance with any of the foregoing, the obtained digital image may include at least a portion of the first region of the build layer outside of the formed layer.

In some arrangements in accordance with any of the foregoing, digital image processing may be performed as part of the process to obtain the first subset of the first region image intensity data from the first subset of the first region image data.

In some arrangements in accordance with any of the foregoing, the digital image may be obtained via a thermographic camera.

In some arrangements in accordance with any of the foregoing, the alert may be a readable communication.

In some arrangements in accordance with any of the foregoing, the sending of the alert may include sending of a graphical representation of an area of concern.

In accordance with another aspect, the fabrication of a build structure may be completed by an additive manufacturing machine based on an assessment of the quality of a formed layer of the build structure by a process in accordance with any of the foregoing. Additionally, as part of such a process, settings of the AM machine may be adjusted after the alert is sent. After adjusting the settings of the AM machine, an immediately subsequent layer of the build structure may be formed on the formed layer.

In some arrangements in accordance with this aspect, the settings of the AM machine may be adjusted automatically by the AM machine based on the first region characteristic value. In some such arrangements, the settings of the AM machine may be adjusted automatically as a result of machine learning by the additive manufacturing machine.

In accordance with another aspect, an AM system may be configured for performing a process in accordance with any of the foregoing processes for assessing a quality of a formed layer of a build structure being fabricated by an AM machine and for completing the fabrication of a build structure based on an assessment of the quality of the formed layer of the build structure. In some such arrangements, the AM system may include an AM device. In some such arrangements, the AM system may further include a computer system that may be co-located with the AM device or that may be in communication with the AM device via a network, e.g., over a cloud network.

In accordance with another aspect, a quality of a build may be assessed by a process. The build may include one or more build structures fabricated by an additive manufacturing machine. In this process, respective threshold values may be compared, via one or more computer processors, to brightness levels of pixels within each of respective tile regions of a first virtual masked build layer in which the virtual masked build layer may include a mask template and a digital image of a first build layer of the build. Each tile region of the virtual masked build layer in which a brightness level of a pixel of the digital image may exceed the corresponding one of the threshold values may be marked, virtually via the one or more computer processors, for each of the tile regions. The comparing and marking steps may be repeated, via the one or more computer processors, for successive virtual masked build layers corresponding to build layers of the build lying over the first build layer in which each of the tile regions of each of the virtual masked build layers may have a corresponding tile location with a tile region of each of the other virtual masked build layers. A tile location value for each tile location may be determined, via the one or more computer processors. The tile location value may be defined as the number of times a pair of the marked tile regions having the same tile location correspond to sequentially formed build layers. The tile location having the highest tile location value may be identified, via the one or more computer processors. Optionally, based on the identification of the tile location having the highest tile location value, a machine setting of an additive manufacturing machine may be modified to adjust the processing of build layers at locations that correspond to the tile location having the highest tile location value.

In some arrangements in accordance with this aspect, a mean and a standard deviation of the brightness levels of the pixels within analysis regions of the digital image of the first build layer may be determined, via the one or more computer processors, for each of the respective tile regions of the first virtual masked build layer. In such arrangements, respective threshold values may be set, via the one or more computer processors, based on the determined standard deviations.

In some arrangements in accordance with this aspect, the tile location having the highest tile location value may be identified, via the one or more computer processors, and in some such arrangements may be stored for future use, via the one or more computer processors and local or remote computer memory.

In accordance with another aspect, a quality of a build may be assessed by a process. The build may include one or more build structures fabricated by an additive manufacturing machine. In this process, respective threshold values may be compared, via one or more computer processors, to brightness levels of pixels within each of respective tile regions of a first virtual masked build layer in which the virtual masked build layer may include a mask template and a digital image of a first build layer of the build. Each tile region of the virtual masked build layer in which a brightness level of a pixel of the digital image exceeds the corresponding one of the threshold values for each of the tile regions may be marked, virtually via the one or more computer processors. The comparing and marking steps may be repeated, via the one or more computer processors, for successive virtual masked build layers corresponding to build layers of the build lying over the first build layer in which each of the tile regions of each of the virtual masked build layers may have a corresponding tile location with a tile region of each of the other virtual masked build layers. All tile locations at which the number of marked tile regions having the same tile location exceeds a preset tile location marking value may be identified, via the one or more computer processors. Optionally, based on the identification of the tile locations at which the number of marked tile regions has the same tile location exceeds the preset tile location marking value, a machine setting of an additive manufacturing machine may be modified to adjust the processing of build layers at locations that correspond to the one or more tile locations at which the number of marked tile regions having the same tile location exceeds the preset tile location marking value.

In some arrangements in accordance with this aspect, a mean and a standard deviation of the brightness levels of the pixels within analysis regions of the digital image of the first build layer may be determined, via the one or more computer processors, for each of the respective tile regions of the first virtual masked build layer. In such arrangements, respective threshold values may be set, via the one or more computer processors, based on the determined standard deviations.

In some arrangements in accordance with this aspect, the tile locations at which the number of marked tile regions having the same tile location exceeds the preset tile location marking value may be identified, via the one or more computer processors, and in some such arrangements may be stored for future use, via the one or more computer processors and local or remote computer memory.

In accordance with another aspect, a quality of a build may be assessed by a process. The build may include one or more build structures fabricated by an additive manufacturing machine. In this process, respective threshold values may be compared, via one or more computer processors, to brightness levels of pixels within each of respective tile regions of a virtual masked build layer in which the virtual masked build layer may include a mask template and a digital image of a first build layer of the build. Pixels of the digital image exceeding the respective threshold values for each of the tile regions of the virtual masked build layer may be marked, virtually via the one or more computer processors. The comparing and marking steps may be repeated, via the one or more computer processors, for successive virtual masked build layers corresponding to build layers of the build lying over the first build layer in which each of the tile regions and pixels within such tile regions of each of the virtual masked build layers may have a corresponding tile location with a tile region of each of the other virtual masked build layers. A marked pixel value for each tile location determined, via the one or more computer processors. The marked pixel value may be defined as the number of marked pixels throughout all virtual masked build layers having the same tile location for each of the tile locations. Optionally, a machine setting of an additive manufacturing machine may be modified to adjust the processing of build layers at locations that correspond to the one or more tile locations at which the marked pixel value exceeds a preset marked pixel value.

In some arrangements in accordance with this aspect, a mean and a standard deviation of the brightness levels of the pixels within analysis regions of the digital image of the first build layer may be determined, via the one or more computer processors, for each of the respective tile regions of the first virtual masked build layer. In such arrangements, respective threshold values may be set, via the one or more computer processors, based on the determined standard deviations.

### BRIEF DESCRIPTION OF THE DRAWINGS

A more complete appreciation of the subject matter of the present invention and various advantages thereof may be realized by reference to the following detailed description, in which reference is made to the following accompanying drawings, in which:
FIG. 1 is a schematic illustration of an additive manufacturing device in accordance with an embodiment;
FIG. 2 is a reproduction of a camera image of a build layer in accordance with the prior art;
FIG. 3 is a top view of a virtual build layer within a computer-aided design (CAD) model before and after the addition of greyscale in accordance with another embodiment;
FIG. 4 is a top view of a mask layer template following manipulation of the CAD model with added greyscale of FIG. 3 in accordance with another embodiment;
FIG. 5 is a top view of the mask layer template of FIG. 4 superimposed onto the camera image of FIG. 2 as a virtual masked build layer to isolate an analysis region within the camera image of the build layer separate from a non-analysis region within the camera image of the build layer in accordance with another embodiment;
FIG. 6 is a plot of the number of pixels within the analysis region isolated as shown in FIG. 5 having brightness intensity levels within preset small, discretized ranges in accordance with another embodiment;
FIG. 7 is a plot of the total number of pixels within the analysis region isolated as shown in FIG. 5 having a brightness intensity level greater than specific levels in accordance with another embodiment;
FIG. 8 is a portion of the analysis region isolated as shown in FIG. 5 in which only pixels having a brightness level greater than a set value are highlighted in accordance with another embodiment;
FIG. 9 is a plot of a percentage of the total area of the analysis region isolated as shown in FIG. 5 having a brightness intensity level greater than specific levels in accordance with another embodiment;
FIG. 10 is a top view of the virtual masked build layer of FIG. 5 with a grid superimposed onto the virtual masked build layer;
FIG. 11 is a process flow diagram of a process for assessing the quality of a formed layer of a build structure being fabricated by an additive manufacturing machine in accordance with another embodiment; and
FIGS. 12-14 are process flow diagrams of processes for assessing the quality of a build structure fabricated by an additive manufacturing machine in accordance with further embodiments.

### DETAILED DESCRIPTION

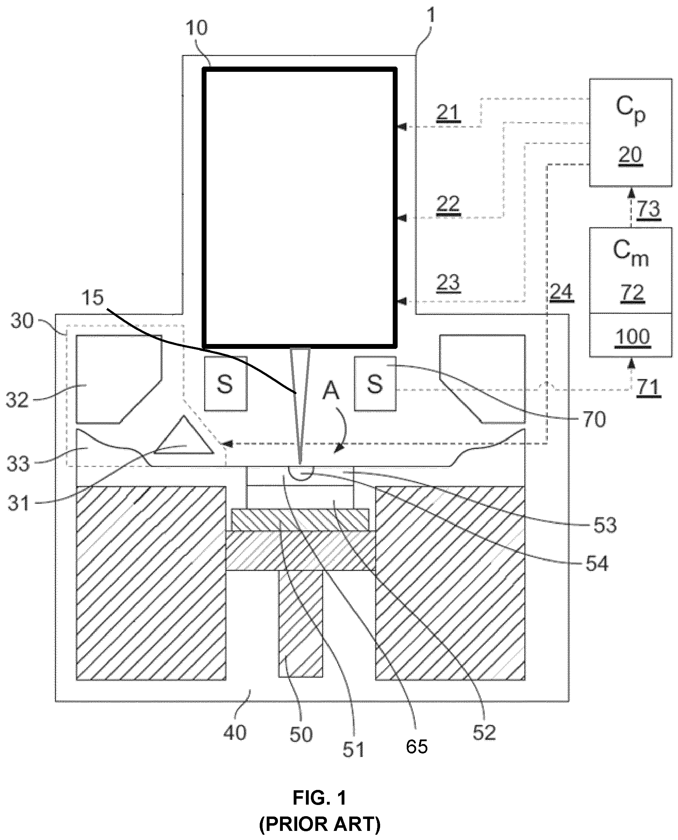

Referring to the drawings, as shown in FIG. 1, additive manufacturing (AM) device 1 includes high energy beam generation apparatus 10, as further described for example in U.S. Patent Application Publication No. 2020/0023435 A1 and U.S. Patent Application Publication No. 2023/0008341 A1, the entire disclosures of which are hereby incorporated by reference herein, or may be embodied in other forms and should not be construed as being limited to the embodiments set forth herein. In the example shown, beam generation apparatus 10 generates high energy beam 15, e.g., an electron beam or laser beam and is at least partially contained in vacuum chamber 40 which maintains a substantially vacuum environment. While part of apparatus 10 may be positioned outside chamber 40 for access and electrical connectivity, the beam generation apparatus is configured for generating and transmitting high energy beam 15 within the vacuum environment, as well as for directing the beam towards powder bed 53.

AM device 1 further includes, among other components as well-known to those skilled in the art, build platform 50, powder deposition system 30, one or more sensors 70, monitoring controller 72, and machine process controller 20. Build platform 50 supports substrate 51 during a build of a construct, e.g., a medical implant. In operation, a layer of material, which may be conductive powder 33 gathered to form powder bed 53, is placed upon substrate 51 and selectively heated to form a first layer of the construct to be formed. Upon the completion of heating of the first layer of the construct, build platform 50 moves downward within a build chamber to allow a successive power bed layer to be deposited onto the newly completed layer by powder deposition system 30. In this manner, as further shown in FIG.1, successive fused layers 52 are formed over substrate 51 supported by build platform 50 until the construct to be formed is completed.

More specifically, in this example, a three-dimensional (3D) construct is formed by progressively melting conductive powder 33 to form liquid melt zone 54 and cooling the melt zone into a set of fused layers 52 on substrate 51. Liquid melt pool 54 is formed by selectively beam-melting powder 33, e.g., suitable powder such as but not limited to titanium, titanium alloys, stainless steel, cobalt chrome alloys, gold, silver, tantalum, and niobium. Powder deposition system 30 includes powder container 32 which stores powder 33 and powder feeder 31 which uniformly deposits the powder, e.g., with a rake or a roller or other suitable powder delivery mechanisms having a controlled speed, on top of substrate 51 for the first layer 52 and then onto previous layers 52 for successive powder depositions. In this example, powder feeder 31 obtains powder 33 from powder containers 32 on opposite sides of substrate 51. While not shown in FIG.1 for simplicity, vacuum chamber 40 may be evacuated using a vacuum subsystem, e.g., turbo-molecular pump, ducts, valves etc., as understood by those skilled in the art. Sintering or full melting of powder 33 may be carried out based on a set of design data, e.g., computer-aided design (CAD) data or other 3D design files, imported to process controller 20. In some arrangements, the 3D design data is divided into a set of successive 2D cross-sections, e.g., slices, by process controller 20 to create design data usable for the fabrication process or is provided to the process controller already divided into such slices. According to the information contained in the design data useable for the fabrication process, process controller 20 commands beam generation apparatus 10 to direct high energy beam 15 towards processing area A and thereby sinter or fully melt selective regions on powder bed 53 by setting suitable process parameters on beam generation apparatus 10.

Still referring to FIG. 1, in providing an in-situ process monitoring and control system for AM device 1, process controller 20 may be electrically connected to one or multiple sensors 70, as in the example shown, to detect and measure one or more specific process features of interest of powder bed 53 and liquid melt zone 54. The information received by sensors 70 corresponding to the process features of interest is relayed to monitoring controller 72, which is connected to process controller 20 as a set of sensor data 71. Monitoring controller 72 receives, and in some arrangements stores within computer memory of the monitoring controller, sensor data 71 and performs one or more algorithms, represented collectively as algorithm 100 in FIG. 1, to interpret the sensor data relative to user-defined parameters.

Monitoring controller 72 transmits electrical signals to process controller 20 to modify process parameters 21-24 for AM device 1 as needed. For example, monitoring controller 72 may transmit electrical signals to process controller 20 to alter settings of any one or any combination of powder deposition system 30, e.g., settings associated with the powder deposition rate of powder container 32, the translational speed of powder feeder 31, and the rotation of powder feeder 31, and beam generation apparatus 10, e.g., settings associated with scan speed, dwell time, beam power, etc. as known to those skilled in the art.

Monitoring controller 72 may be configured to operate as an integrating system which consists of components responsible for process data collection, storage, interpretation, comparison, and information or instructional digital signal generation. High-speed data acquisition boards may be used for real-time acquisition of large volumes of process data associated with a high-speed time-series feedback signal and digital images, e.g., those generated by a thermal imaging device. Monitoring controller 72 may include sufficient read only memory (ROM), random access memory (RAM), electronically-erasable programmable read only memory (EEPROM), etc., of a size and speed sufficient for executing algorithm 100 as set forth below. Monitoring controller 72 may also be configured or equipped with other required computer hardware, such as a high-speed clock, requisite analog-to-digital (A/D) and digital-to-analog (D/A) circuitries, any necessary input or output circuitries and devices (I/O), as well as appropriate electrical signal conditioning and/or buffer circuitry. Any algorithms resident in AM machine 1 or accessible thereby, including algorithm 100, as described below, may be stored in memory and automatically executed to provide the respective functionality.

In the example shown in FIG. 1, algorithm 100, which may be embodied as a single algorithm or multiple algorithms, is automatically executed by monitoring controller 72 to interpret sensor data 71 and by process controller 20 on AM device 1 to modify process parameters during the AM process. Interpretation of sensor data 71 by monitoring controller 72 identifies an appropriate action to be taken and determines input parameters 73, which may be transmitted as a set of input parameters, to be sent from monitoring controller 72 to process controller 20, needed to modify process settings, in order to maintain part quality and process efficiency, in which in some arrangements such settings may be limited by preset limits stored in the monitoring controller or the process controller. Process controller 20 transmits electrical signals corresponding to process parameters 21-23 to beam generation apparatus 10 to modify settings of the beam generation apparatus and transmits electrical signals corresponding to process parameter 24 to powder deposition system 30 to modify settings of the powder deposition system. In this manner, a closed-loop process feedback control is formed between monitoring controller 72, working with process controller 20, and system components, e.g., beam generation apparatus 10, powder deposition system 30, etc., of AM device 1 to allow for a real-time modification to final control parameters 21-24.

The process features of interest to be monitored across the processing area, as indicated by arrow A in FIG. 1, during the AM process are associated with one or more sensors 70. In some arrangements, sensors 70 may be integrated into AM device 1 and operated independently or in combination with each other depending on the particular application. As further shown in FIG. 1, in some arrangements, one or more of sensors 70 may be mounted inside vacuum chamber 40. In some arrangements, sensors 70 may be one or multiple thermal imaging devices, which may be thermographic cameras, e.g., infrared cameras. Such sensors may be moveable, such as by being attached to robots within AM device 1. Images obtained from thermal imaging devices may correspond to any one or any combination of a temperature of powder bed 53, a temperature of liquid melt zone 54, a temperature of solidified melted surface 65.

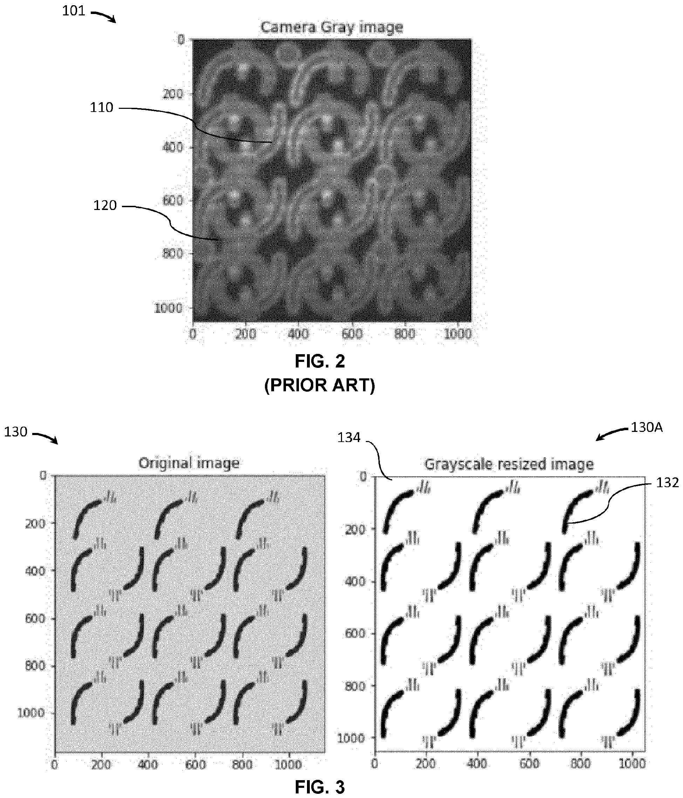

As shown in FIG. 2, digital image 101 of a build layer may be taken by sensor 70, which may be a camera such as a thermographic camera. The brighter portions of image 101 represent hotter areas of the subject build layer and the darker areas represent cooler areas of the subject build layer. In image 101, first region or regions 110 represent a formed layer of a build structure or build structures (as shown, a total of twenty-one (21) build structures in the form of patellofemoral implants merely for example only), and second region 120 represents an unformed portion of the build layer where the high energy beam, in this case an electron beam, was not focused and thus did not impinge upon the powder bed. Relatively consistent shades within image 101 represent more even heat distributions of regions of the formed layer corresponding to the regions of the image that have such shades. In contrast, defects in the formed layer tend to appear with inconsistent shades within corresponding regions of the image taken of the build layer.

Referring now to FIG. 3, virtual build layer slice 130 is generated from a slice of a computer-aided design (CAD) model of a build structure to be produced by an AM process, e.g., using CAD modeling software such as Autodesk° Fusion 360°, and corresponds to a layer of a build structure to be analyzed. As shown, virtual build layer slice 130 is converted to greyscale virtual build layer slice 130A, e.g., by further using the CAD modeling software or by using computer programming such as Python^{®} programming language. As shown, greyscale virtual build layer slice 130A includes desired virtual build structure layer portions 132, in this case a set of portions of layers of virtual build structures corresponding to portions of formed layers of build structures to be formed, shown in black and remaining portions 134 of the greyscale virtual build layer slice shown in white. As in the example shown, each desired virtual build structure layer portion or portions 132 within a greyscale virtual build layer slice 130A may be an entirety or only a portion or portions of a virtual build structure layer to improve quality analysis and thereby production efficiency as only such portion or portions may be desired to be analyzed during an AM process.

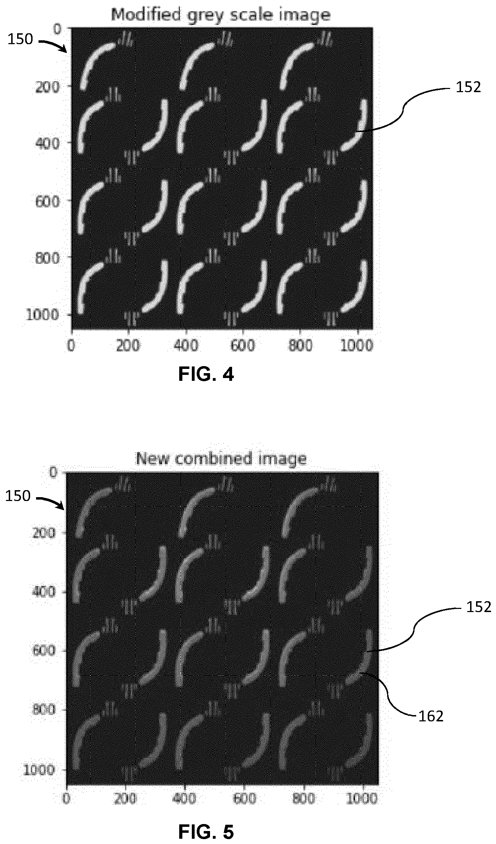

With reference to FIG. 4, layer mask template 150 is generated from greyscale virtual build layer slice 130A, e.g., by further using the CAD modeling software or by using computer programming such as Python^{®} programming language. To prepare layer mask template 150, virtual build layer slice 130A is further manipulated by any one or any combination of rescaling, translating, and rotating the virtual build layer slice such that one or more locations of the manipulated virtual build layer slice 130A align or otherwise correspond to one or more respective locations of image 101 when the manipulated virtual build layer slice overlaps image 101. In one example, right angle brackets (not shown) may be printed during the AM process onto one or more corners, e.g., the top right and the bottom left corners, of the build plate to aid in alignment of the manipulated virtual build layer slice 130A with image 101. In another example, the right angle brackets in certain corners may be replaced for alignment purposes by a full box (not shown) printed around the build plate.

Furthermore, a black and white coloration of pixels defining greyscale virtual build layer slice 130A are reversed such that the black pixels of virtual build structure layer portions 132 are turned to white pixels and the white pixels of virtual build structure layer portions 134 are turned to black pixels. Upon completion of the manipulation of the virtual build layer slice 130, 130A, the completed virtual build layer slice is stored, via an accessible computer memory, to provide layer mask template 150 for use in assessing the quality of corresponding build layers of build structures. As shown, mask layer template 150 includes desired first region boundaries 152 corresponding to outer edges of desired virtual build structure layer portions 132 following the manipulation of greyscale virtual build layer slice 130A. Desired first region boundaries 152 outline a desired form for first regions 110 corresponding to portions of formed layers of build structures, as in the example shown in image 101, or an entirety of a formed layer of a build structure in some arrangements.

In the same manner as discussed with respect to FIGS. 3 and 4, layer mask templates may be prepared from each of the other slices of the CAD model of the build structure to be prepared where each such slice corresponds to a build structure layer or build structure layers to be formed by the AM process, e.g., by AM device 1. The rescaling, translating, and rotating processes applied to the virtual build layer slices to prepare the layer mask templates from each of the other slices of the CAD model of the build structure may be the same as that applied to the initial virtual build layer slice that corresponds to the first build layer formed directly on substrate 51, which may be a build plate of AM device 1 or a prefabricated portion of an object to which the build structure formed by AM device 1 may be attached.

Referring now to FIG. 5, during a build structure fabrication process, layer mask template 150 is superimposed on image 101 in the form a virtual mas. In this manner, desired first region boundaries 152 of layer mask template 150 isolate and thereby separate first analysis region or regions 162 of image 101 from the remainder of image 101. First analysis region or regions 162 are defined by first region image data extracted from image 101 and provide relative location and image intensity data, e.g., a brightness level, associated with the set of individual pixels within the first analysis region or regions. In contrast, the remainder of image 101 is defined by second region image data that will no longer be considered and thus need not even be stored in computer memory further as desired. In this example, desired first region boundaries 152 of layer mask template 150 also correspond to at least a majority of first regions 110 of the formed layer.

Individual pixels of first analysis region or regions 162 are given X-Y coordinates of a preset coordinate system in which the X-Y coordinates correspond to the relative locations of the individual pixels. The X-Y coordinates may be given any time after image 101 is created and similarly may be given for regions of subsequent images created for subsequent build layers. In some such arrangements, the X-Y coordinates may be given immediately following the isolation of first analysis region or regions 162 such that only the first analysis region or regions are given X-Y coordinates. In this manner, computer data storage space may be conserved. In other arrangements, individual pixels of an entirety of layer mask template 150 (and all other layer mask templates for a build structure) may be given X-Y coordinates defining a layer data template, and individual pixels of an entirety of image 101 may be given X-Y coordinates defining part of the first and the second region image data. In such arrangements, individual pixels within image 101 (and similarly subsequent images) that have X-Y coordinates that match X-Y coordinates of layer mask template 150 are not considered further and indeed can be removed from computer memory storage.

With first analysis region or regions 162 isolated and X-Y coordinates given to the individual pixels of the first analysis region or regions, the individual pixels of the first analysis region or regions may be analyzed in view of their relative locations. In some arrangements, such analysis may yield a first region characteristic value. In one example, the first region characteristic value may be a quantity of virtual spots identified in first analysis region or regions 162 of the virtual model of the formed layer. In this example, the first region characteristic value may be compared to a preset threshold value for a quantity of virtual spots. When the first region characteristic value exceeds the preset threshold value for the quantity of virtual spots, a prompt or other alert may be triggered by a controller, such as monitoring controller 72 of AM device 1. The preset threshold value in this example may be as low as 1 or may be a greater scalar value.

In another example, the first region characteristic value may be a quantity of adjacent virtual spots identified in first analysis region or regions 162 of the virtual model of the formed layer that have an image intensity value, which may be a value corresponding to a brightness level of a pixel or defined grouping of pixels, greater than an image intensity value preset in a controller, e.g., monitoring controller 72 of AM device 1 or a remote computer system in communication with the monitoring controller over a network such as a cloud network. In this example, the first region characteristic value may be compared to a preset threshold value for a quantity of adjacent virtual spots having a certain image intensity value. When the first region characteristic value exceeds the preset threshold value for the quantity of adjacent virtual spots having a certain image intensity value, a prompt or other alert may be triggered by a controller, such as monitoring controller 72. Adjacent virtual spots may be identified and counted by the controller or other computer device. In some arrangements of this example, the adjacent virtual spots may correspond to pixels within first analysis region or regions 162 that are less than a preset distance from each other. In some other arrangements of this example, the adjacent virtual spots may correspond to only abutting pixels within first analysis region or regions 162. In either of these arrangements, the pixels counted as adjacent virtual spots may be restricted to sets of pixels extending only in certain directions, e.g., pixels having the same X- coordinate or the same Y- coordinate, or sets of pixels of back-to-back images 101 having the same X-Y coordinates where such pixels would correspond to vertically adjacent positions within a build structure.

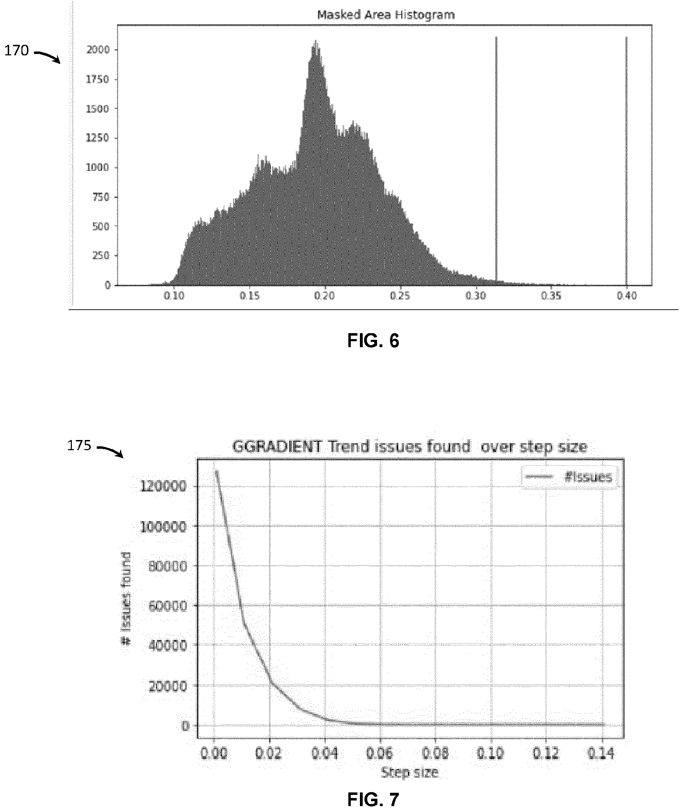

Referring now to FIG. 6, in another example, the number of pixels within first analysis region or regions 162 of the virtual model of the formed layer having brightness intensity levels within preset small, discretized ranges may be recorded by a controller, e.g., monitoring controller 72 or a remote computer system in communication with the monitoring controller over a network such as a cloud network. The discretized ranges may be single values depending on the resolution used to record the brightness levels of the image intensity data. If a preset proportion, e.g., 0.1%, 0.5%, 1%, 1.25%, 2.5%, etc., of the pixels within first analysis region or regions 162 are beyond a preset brightness level, e.g., 0.25, 0.3, 0.4, 0.45, etc., then a prompt or other alert may be triggered by a controller, such as monitoring controller 72 of AM device 1. The preset proportion, in some arrangements, may be a single pixel beyond the preset brightness level. As shown in FIG. 6, the number of pixels within first analysis region or regions 162 that are within various discretized ranges may be plotted against their brightness ranges in a histogram such as histogram 170. In the example shown, the threshold brightness level is set at 0.3135, and the preset proportion of the pixels within first analysis region or regions 162 with a higher brightness level than the threshold brightness level is 1.0%. Since the proportion of the pixels within first analysis region or regions 162 that are greater than 0.3135 in this example is approximately 1.6%, the build layer sampled is considered a bad build layer. In this instance, a prompt or other alert would be triggered by the controller, e.g., monitoring controller 72 or process controller 20, and the part either scrapped or taken offline for further evaluation.

With reference now to FIG. 7, in another evaluation example in the form of a gradient analysis, the total number of pixels within first analysis region or regions 162 of the virtual model of the formed layer having a brightness intensity level greater than specific levels is determined and recorded by a controller, e.g., monitoring controller 72 or a remote computer system in communication with the monitoring controller over a network such as a cloud network. Thus, many and indeed most of the pixels are counted more than once. As shown in plot 175 of FIG. 7, the number of pixels may be plotted against a range of brightness intensity levels to show a trend of the number of issues at various degrees of the issues. Such plots necessarily decrease asymptotically as shown. Such plots may be used to make both objective and subjective quality assessments of the processing of the specific formed layer evaluated or of a build structure and process as a whole and thereby to determine whether any processing changes are needed.

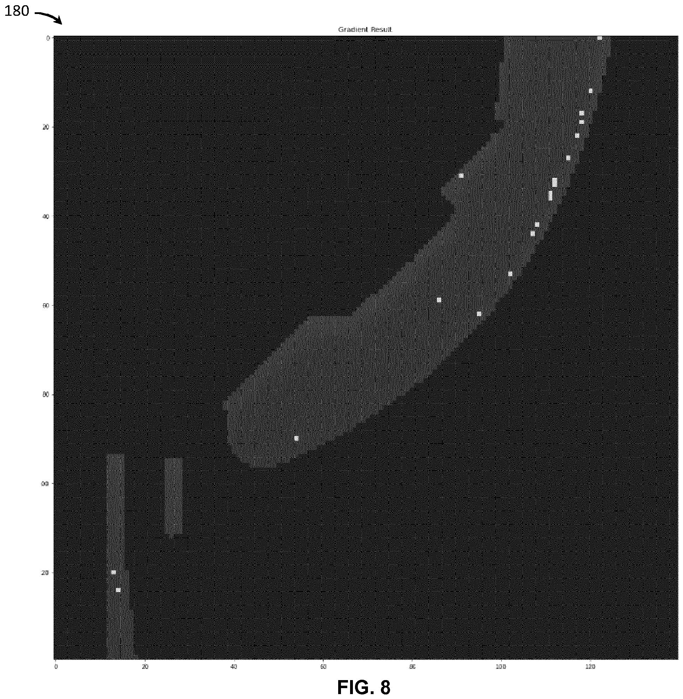

As shown in FIG. 8, a portion or portions of first analysis region or regions 162 are isolated and only pixels having a brightness level greater than a set value are highlighted in modified virtual model 180. Using this model, a subjective quality assessment of the processing of the specific formed layer evaluated or of a build structure and process as a whole may be made and thereby a determination may be made as to whether any processing changes are needed.

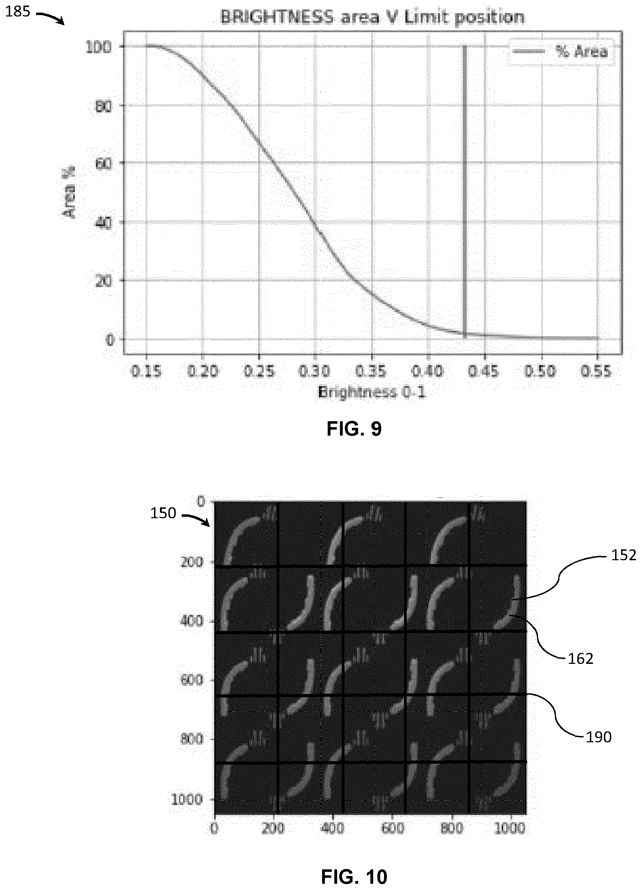

Referring now to FIG. 9, the total number of pixels within first analysis region or regions 162 of the virtual model of the formed layer having a brightness intensity level greater than specific levels may be determined and converted to a percentage of the total area of the first analysis region or regions being evaluated. The total area may be computed as the total number of pixels within the first analysis region or regions. If a preset proportion, e.g., 0.1%, 0.5%, 1%, 1.25%, 2.5%, etc., of the percentage of the total area within first analysis region or regions 162 is at a brightness level beyond a preset brightness level, e.g., 0.25, 0.3, 0.45, 0.5, etc., then a prompt or other alert may be triggered by a controller, such as monitoring controller 72 of AM device 1. The preset proportion, in some arrangements, may be that of any percentage area within first analysis region or regions 162 at a brightness level beyond the preset brightness level. As shown in FIG. 8, the percentage of the total area of the first analysis region or regions having at least the labeled brightness level may be plotted against that brightness level in a histogram such as histogram 185 shown in FIG. 9. In the example shown, the threshold brightness level is set at 0.433, and the preset proportion of the percentage of the total area within first analysis region or regions 162 with a higher brightness level than the threshold brightness level is 1.0%. Since the proportion of the pixels within first analysis region or regions 162 that are greater than 0.433 in this example is approximately 1.63%, the build layer sampled is considered a bad build layer. In this instance, a prompt or other alert would be triggered by the controller, e.g., monitoring controller 72 or process controller 20, and the part either scrapped or taken offline for further evaluation.

Referring again to the virtual masked build layer shown in FIG. 5, in other examples, the first region characteristic value may be a measure of central tendency. In such arrangements, the measure of central tendency may be a mean, median, or mode of the brightness levels of pixels within first analysis region or regions 162 of the virtual model of the formed layer. In such examples, when the first characteristic value exceeds the preset threshold value for the measure of central tendency, a prompt or other alert may be triggered by a controller, such as monitoring controller 72.

As shown in FIG. 10, in some arrangements, image 101 is divided digitally into measurement regions in the form of tiles. In the example shown, image 101 is divided into twenty-five (25) tiles in a 5x5 matrix, although in other arrangements the image could be divided into a different number of tiles forming different matrices, e.g., 4x4, 4x5, 6x6, 10x10, 10x15, 20x25, 25x25, 50x50, 100x100, 500x500, 1000x1000, etc. In the example shown, the virtual masked build layer in which layer mask template 150 is superimposed onto image 101 is divided into the tiles by grid 190, although the division of the image could be done prior to superimposing the layer mask template onto the image. Grid 190 may be provided as a visual effect on a computer display, although the division of image 101 is performed digitally, e.g., via a computer processor such as process controller 20.

In such arrangements, any one or any combination of the mean, the median, and the standard deviation for the brightness level of first analysis region or regions 162 within each tile is determined as a set of first region characteristic values for each of the tiles. The first characteristic values for each of the tiles are compared, e.g., via monitoring controller 72 or a remote computer system in communication with the monitoring controller over a network such as a cloud network, to a respective preset threshold value or values. In some examples, the mean of the first analysis region or regions 162 within each tile may be the first characteristic value and may be compared, e.g., via monitoring controller 72 or a remote computer system in communication with the monitoring controller over a network such as a cloud network, to a preset threshold value. In some examples, the standard deviation alone or the mean plus the standard deviation determined for each tile is determined as the first characteristic value and such first characteristic value then compared, via monitoring controller 72 or a remote computer system in communication with the monitoring controller over a network such as a cloud network, to a preset threshold value. In some modifications, the mean and up to six times, e.g., twice, the standard deviation for each tile are added together to become the first characteristic value and compared, via monitoring controller 72 or a remote computer system in communication with the monitoring controller over a network such as a cloud network, to an appropriate preset threshold value, such threshold value being relatively larger for each additional standard deviation being utilized. In any of these examples and modifications, if the first characteristic value exceeds the preset threshold value, a prompt or other alert would be triggered by the controller, e.g., monitoring controller 72 or process controller 20, and the part either scrapped or taken offline for further evaluation.

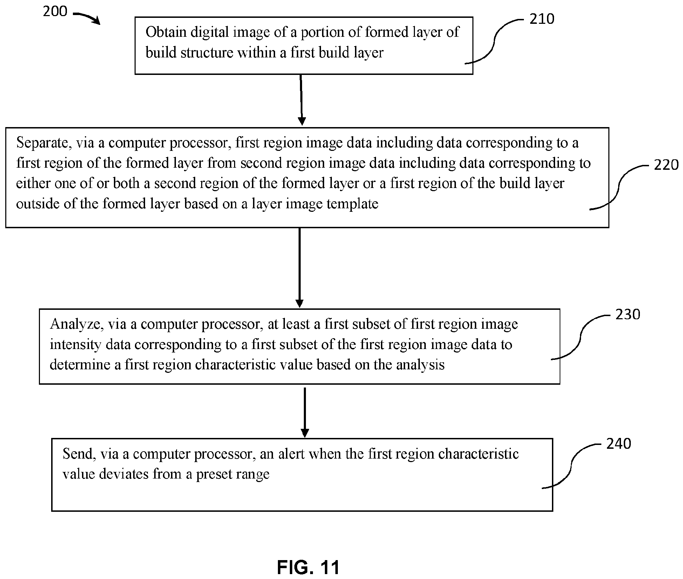

Referring now to FIG. 11, via process 200, the quality of a formed layer of a build structure being fabricated by an additive manufacturing machine, e.g., AM device 1, is assessed. At step 210, a digital image of a portion of the formed layer of the build structure within a first build layer, e.g., image 101, is obtained, e.g., by sensor 70. At step 220, first region image data including data corresponding to a first region of the formed layer is separated, via a computer processor, from second region image data including data corresponding to either one of or both a second region of the formed layer or a first region of the build layer outside of the formed layer based on a layer image template, e.g., mask layer template 150. At step 230, at least a first subset of first region image intensity data corresponding to a first subset of the first region image data is analyzed, via a computer processor, to determine a first region characteristic value based on the analysis. Such analysis may be that described above with respect to image 101. At step 240, a prompt or other alert may be sent, via a computer processor, when the first region characteristic value deviates from a preset range. The prompt or alert may be sent by a controller, e.g., monitoring controller 72 or a remote computer system in communication with the monitoring controller over a network such as a cloud network. A comparison of the first region characteristic value to a preset range may be made prior to step 240 in the manner described above with respect to image 101.

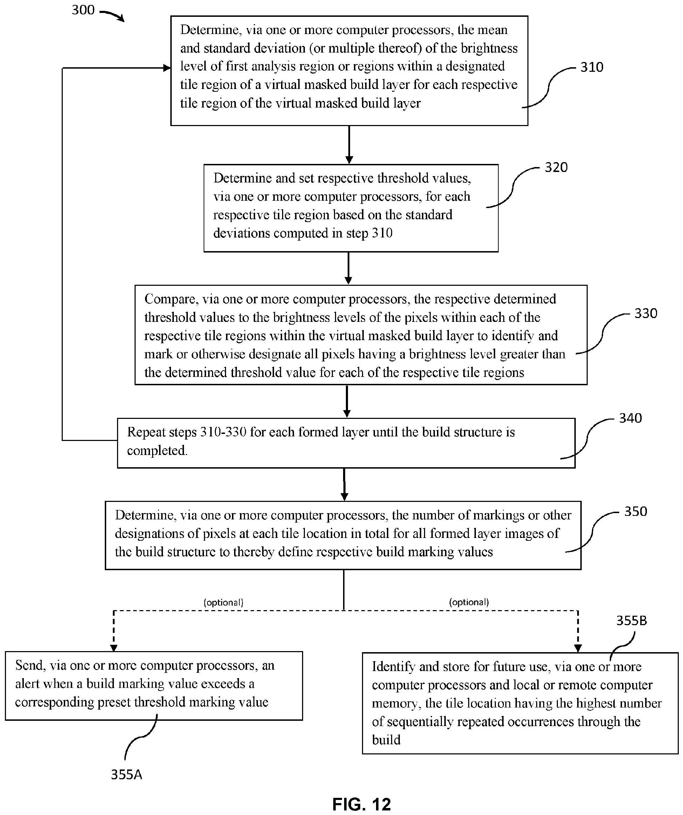

As shown in FIG. 12 and with reference to FIG. 10, in another variation and via process 300, the quality of a build structure fabricated by an additive manufacturing machine, e.g., AM device 1, is assessed. At step 310, the mean and the standard deviation, or the mean and some multiple of the standard deviation, for the brightness level of first analysis region or regions 162 within each tile of the virtual masked build layer defined by grid 190 are computed, e.g., via monitoring controller 72 or a remote computer system in communication with the monitoring controller over a network such as a cloud network. At step 320, respective threshold values are then determined, e.g., via monitoring controller 72 or a remote computer system in communication with the monitoring controller over a network such as a cloud network, and set, e.g., via the monitoring controller or a remote computer system in communication with the monitoring controller over a network such as a cloud network, for each tile region defined by grid 190 by applying a preset factor, e.g., 1.05, 1.10, 1.2, or other factor, to the computed standard deviation (or multiple of the standard deviation). In this manner and based on the example factors, the respective threshold values may be but are not limited to being a sum of the computed mean and 105%, 110%, 120%, or some other corresponding percentage of the computed standard deviation (or multiple of the standard deviation). The factor applied to the standard deviation could be the same for all tile regions or could be different for some or all of the tiles. At step 330, the respective determined threshold values are then compared, e.g., via monitoring controller 72 or a remote computer system in communication with the monitoring controller over a network such as a cloud network, to the brightness levels of the pixels within each of the respective tile regions to identify all pixels having a brightness level greater than the determined threshold value for each of the respective tile regions. All identified pixels may be marked or otherwise designated as those exceeding their corresponding threshold value. At step 340, steps 310-330 are repeated until the build structure is completed. At step 350, the number of markings or other designations of pixels having excessive brightness values within each of the respective tile regions at each tile location, e.g., positions (1, 1), (3, 5), and (5, 5) for a 5x5 tile matrix, in total for all formed layer images 101 of a build structure is determined, e.g., via monitoring controller 72 or a remote computer system in communication with the monitoring controller over a network such as a cloud network, to define respective build marking values.

In some arrangements, at step 355A, when the build marking value associated with a tile location exceeds a corresponding preset threshold marking value, a prompt or other alert may be triggered by a controller, monitoring controller 72 or process controller 20, and the part either scrapped or taken offline for further evaluation. In some arrangements, at step 355B, the tile location which has the highest number of sequentially repeated occurrences through an entirety of the build (or a section thereof) may be identified, e.g., via monitoring controller 72 or a remote computer system in communication with the monitoring controller over a network such as a cloud network, and then stored, e.g., via monitoring controller 72 or a remote computer system in communication with the monitoring controller over a network such as a cloud network, into local or remote computer memory, e.g., on a cloud network, for future use. The design and manufacturing parameters associated with that tile location may then be evaluated more carefully to see if either of or both design and process improvements may be made to improve the quality of the build structures at that location. In each of these arrangements, formed layer digital images 101 optionally may be stored, e.g., via monitoring controller 72, into local or remote computer memory, e.g., on a cloud network, for future use.

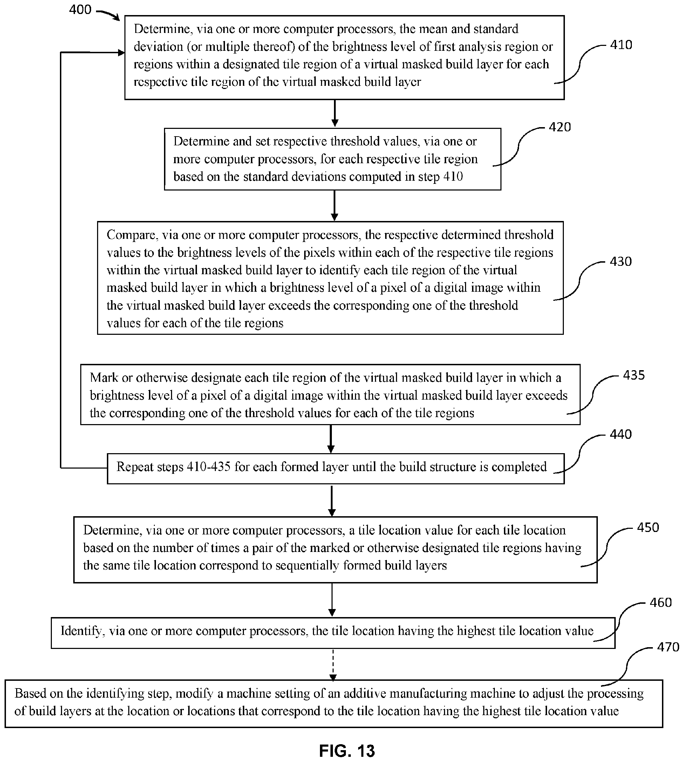

As shown in FIG. 13 and again with reference to FIG. 10, in another variation and via process 400, the quality of a build structure fabricated by an additive manufacturing machine, e.g., AM device 1, is assessed. At step 410, the mean and the standard deviation, or the mean and some multiple of the standard deviation, for the brightness level of first analysis region or regions 162 within each tile defined by grid 190 are computed, e.g., via monitoring controller 72 or a remote computer system in communication with the monitoring controller over a network such as a cloud network. At step 420, respective threshold values are then determined, e.g., via monitoring controller 72 or a remote computer system in communication with the monitoring controller over a network such as a cloud network, and set, e.g., via the monitoring controller or a remote computer system in communication with the monitoring controller over a network such as a cloud network, for each tile region defined by grid 190 by applying a preset factor, e.g., 1.05, 1.10, 1.2, or other factor, to the computed standard deviation (or multiple of the standard deviation) as described with respect to step 320 above. The factor applied to the standard deviation could be the same for all tile regions or could be different for some or all of the tiles. At step 430, the respective determined threshold values are then compared, e.g., via monitoring controller 72 or a remote computer system in communication with the monitoring controller over a network such as a cloud network, to the brightness levels of the pixels within each of the respective tile regions to identify each tile region of the virtual masked build layer in which a brightness level of a pixel of a digital image within the virtual masked build layer exceeds the corresponding one of the threshold values for each of the tile regions. At step 435, all identified tile regions may be marked or otherwise designated as those having a pixel with a brightness level exceeding the corresponding one of the threshold values for each of the tile regions. At step 440, steps 410-435 are repeated until the build structure is completed. At step 450, a tile location value for each tile location is determined, e.g., via monitoring controller 72 or a remote computer system in communication with the monitoring controller over a network such as a cloud network, based on the number of times a pair of the marked or otherwise designated tile regions having the same tile location correspond to sequentially formed build layers. For example, if each tile region corresponding to two sets of sequentially formed build layers at tile location positions (2, 4) for a 5x5 tile matrix, have been marked or otherwise designated, then the tile location value would be "2." At step 460, the tile location having the highest tile location value is identified, e.g., via human review of the determined tile location values or via monitoring controller 72 or a remote computer system in communication with the monitoring controller over a network such as a cloud network. Optionally, at step 470, based on the identification of the tile location having the highest tile location value, a machine setting of an additive manufacturing machine, e.g., AM device 1, is modified to adjust the processing of build layers at the location or locations that correspond to the tile location having the highest tile location value. Formed layer digital images 101 optionally may be stored, e.g., via monitoring controller 72, into local or remote computer memory, e.g., on a cloud network, for future use.

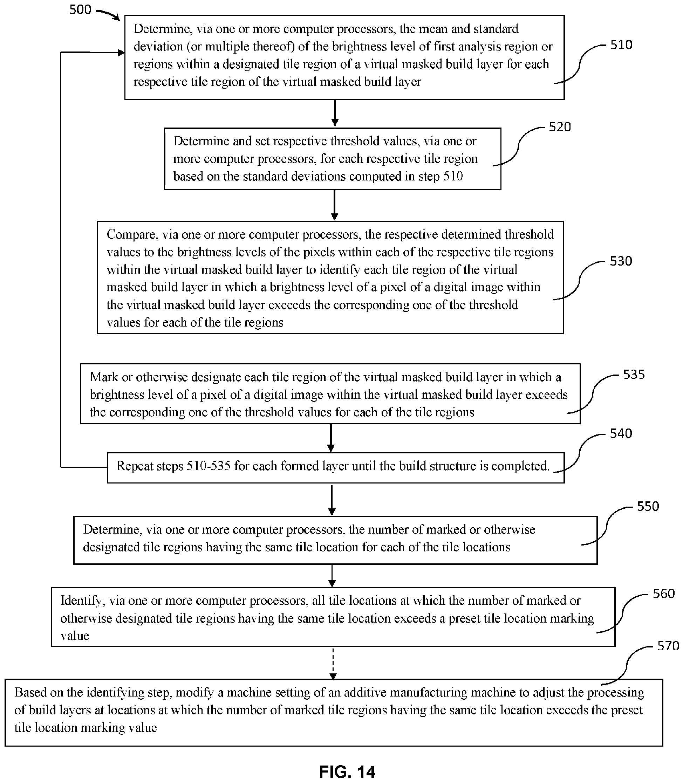

As shown in FIG. 14 and again with reference to FIG. 10, in another variation and via process 500, the quality of a build structure fabricated by an additive manufacturing machine, e.g., AM device 1, is assessed. At step 510, the mean and the standard deviation, or the mean and some multiple of the standard deviation, for the brightness level of first analysis region or regions 162 within each tile defined by grid 190 are computed, e.g., via monitoring controller 72 or a remote computer system in communication with the monitoring controller over a network such as a cloud network. At step 520, respective threshold values are then determined, e.g., via monitoring controller 72 or a remote computer system in communication with the monitoring controller over a network such as a cloud network, and set, e.g., via the monitoring controller or a remote computer system in communication with the monitoring controller over a network such as a cloud network, for each tile region defined by grid 190 by applying a preset factor, e.g., 1.05, 1.10, 1.2, or other factor, to the computed standard deviation (or multiple of the standard deviation) as described with respect to steps 320, 420 above. The factor applied to the standard deviation could be the same for all tile regions or could be different for some or all of the tiles. At step 530, the respective determined threshold values are then compared, e.g., via monitoring controller 72 or a remote computer system in communication with the monitoring controller over a network such as a cloud network, to the brightness levels of the pixels within each of the respective tile regions to identify each tile region of the virtual masked build layer in which a brightness level of a pixel of a digital image within the virtual masked build layer exceeds the corresponding one of the threshold values for each of the tile regions. At step 535, all identified tile regions may be marked or otherwise designated as those having a pixel with a brightness level exceeding the corresponding one of the threshold values for each of the tile regions. At step 540, steps 510-535 are repeated until the build structure is completed. At step 550, the number of marked or otherwise designated tile regions having the same tile location for each of the tile locations is determined, e.g., via monitoring controller 72 or a remote computer system in communication with the monitoring controller over a network such as a cloud network. At step 560, all tile locations at which the number of marked or otherwise designated tile regions having the same tile location exceeds a preset tile location marking value are identified as being potentially problematic tile locations, e.g., via human review of the determined tile location values or via monitoring controller 72 or a remote computer system in communication with the monitoring controller over a network such as a cloud network. For example, if the preset tile location marking value is set at 3, then all tile locations in which 4 or more tile regions sharing the same tile location are marked or otherwise designated, will be identified. Optionally, at step 570, based on the identification of the tile locations that exceed the preset tile location marking value, a machine setting of an additive manufacturing machine, e.g., AM device 1, is modified to adjust the processing of build layers at locations at which the number of marked tile regions having the same tile location exceeds the preset tile location marking value. Formed layer digital images 101 optionally may be stored, e.g., via monitoring controller 72, into local or remote computer memory, e.g., on a cloud network, for future use.

It is to be understood that the disclosure set forth herein includes any possible combinations of the particular features set forth above, whether specifically disclosed herein or not. For example, where a particular feature is disclosed in the context of a particular aspect, arrangement, configuration, or embodiment, that feature can also be used, to the extent possible, in combination with and/or in the context of other particular aspects, arrangements, configurations, and embodiments of the invention, and in the invention generally.

Furthermore, although the invention disclosed herein has been described with reference to particular features, it is to be understood that these features are merely illustrative of the principles and applications of the present invention. It is therefore to be understood that numerous modifications may be made to the illustrative embodiments and that other arrangements may be devised without departing from the spirit and scope of the present invention. In this regard, the present invention encompasses numerous additional features in addition to those specific features set forth in the claims below.

## Claims

1. A method for assessing a quality of a formed layer of a build structure being fabricated by an additive manufacturing machine, comprising steps of:
obtaining a digital image of at least a portion of the formed layer of the build structure within a first build layer;
separating, via one or more computer processors, first region image data including data corresponding to a first region of the formed layer from second region image data including data corresponding to either one of or both a second region of the formed layer or a first region of the build layer outside of the formed layer based on a layer image template;
analyzing, via the one or more computer processors, a first subset of first region image intensity data corresponding to a first subset of the first region image data to determine a first region characteristic value based on the analysis; and
sending, via the one or more computer processors, an alert when the first region characteristic value deviates from a preset range.

2. The method of claim 1, further comprising a step of comparing, via the one or more computer processors, the first region characteristic value to the preset range prior to the sending step.

3. The method of claim 1 or claim 2, wherein the first region image intensity data includes matrix locations of a matrix.

4. The method of any one of claims 1-3, wherein the layer image template is a virtual model, and further comprising preparing a virtual model of the formed layer.

5. The method of claim 4, wherein the first region image intensity data includes a grey scale level of pixels of the virtual model of the formed layer.

6. The method of claim 4 or claim 5, further comprising a step of corresponding a preset portion of the layer image template with a portion of the virtual model of the formed layer such that the layer image template outlines at least a section of the virtual model of the formed layer.

7. The method of claim 6, wherein the corresponding step includes any one or any combination of rescaling, translating, and rotating either one of or both the layer image template and the virtual model of the formed layer to align at least one location of the layer image template with at least one respective location of the virtual model of the formed layer.

8. The method of any one of claims 4-7, wherein the first region characteristic value corresponds to a quantity of virtual spots identified in a virtual first region of the virtual model of the formed layer corresponding to the first region of the formed layer, and wherein the preset range is a scalar value.

9. The method of any one of claims 4-7, wherein the first region characteristic value corresponds to a quantity of adjacent virtual spots identified in a virtual first region of the virtual model of the formed layer corresponding to the first region of the formed layer having an image intensity value greater than a preset image intensity value, and wherein the preset range is a scalar value.

10. The method of claim 9, further comprising a step of identifying and thereby counting each individual virtual spot from a respective single pixel of the obtained digital image, wherein adjacent virtual spots correspond to pixels of the obtained digital image less than a preset distance from each other.

11. The method of claim 9, further comprising a step of identifying and thereby counting each individual virtual spot from a respective single pixel of the obtained digital image, wherein adjacent virtual spots correspond to abutting pixels of the obtained digital image.

12. The method of any one of claims 8-11, wherein the quantity of virtual spots is less than the preset scalar range.

13. The method of any one of claims 1-12, wherein the first region characteristic value is a measure of central tendency, a measure of variability, or a sum of the measure of central tendency and the measure of variability.

14. The method of any one of claims 1-13, wherein the obtained digital image includes at least a portion of the first region of the build layer outside of the formed layer.

15. The method of any one of claims 1-14, wherein the digital image is obtained via a thermographic camera.
